# EUROPEAN PATENT APPLICATION

(11) **EP 4 358 198 A1**
(43) Date of publication of application: **24.04.2024**
(21) Application number: 22727437.0
(22) Date of filing: 09.05.2022
(51) Int. Cl.: H01M 8/04089, H01M 8/04082, H01M 8/04746

(54) **HYDROGEN SUPPLY DEVICE**

(30) Priority: 17.06.2021 JP 2021100736
(71) Applicant: Robert Bosch GmbH, 70442 Stuttgart (DE)
(72) Inventor: MAKINO, Shinichi, Higashimatsuyama-shi, Saitama (JP); TATE, Atsushi, Higashimatsuyama-shi, Saitama (JP)
(74) Representative: Isarpatent
(86) International application number: PCT/IB2022/054271
(87) International publication number: WO 2022/263937

(57) **Abstract**

[Problem] The present invention provides a hydrogen supply device that stably supplies hydrogen to a fuel cell according to an operation state.

[Means for Resolution] A hydrogen supply device (10) includes: an injector (10b) including a solenoid valve (25) and injecting hydrogen from an injection hole (23) when the solenoid valve (25) is opened; and an ejector (10a) that suctions hydrogen in anode off-gas of a fuel cell (51) by a negative pressure generated by a flow of hydrogen injected from the injector (10b) and supplies, to the fuel cell (51), hydrogen injected from the injector (10b) and hydrogen in the anode off-gas. The solenoid valve (25) includes: a valve seat section (6) including the injection hole (23); and a valve body (2) seated on the valve seat section (6) when the solenoid valve (25) is closed, and is configured that a cross-sectional area of a hydrogen flow path in the injection hole (23) varies according to a stroke amount of the valve body (2).

## Description

### Technical Field

The present invention relates to a hydrogen supply device that supplies hydrogen as fuel to a fuel cell in a fuel cell system.

### Background Art

A fuel cell system that includes plural injectors in parallel between an ejector for supplying hydrogen to a fuel cell and a hydrogen tank is disclosed in PTL 1. The ejector suctions hydrogen in anode off-gas through an anode off-gas circulation passage by using a negative pressure that is generated by hydrogen flowing from the hydrogen tank via an injector, and supplies hydrogen supplied from the injector and hydrogen in the anode off-gas to an anode area of the fuel cell. Here, the anode off-gas is gas that is discharged from the anode area of the fuel cell, and contains hydrogen that remains without contributing to electric power generation reaction in the anode area and moisture that has permeated from a cathode area to the anode area during the electric power generation reaction. The moisture is discharged to the outside of the fuel cell system via an anode off-gas discharge passage, which branches off in the middle of the anode off-gas circulation passage.

### Citation List

### Patent Literature

PTL 1: JP-A-2018-060757

### Summary of Invention

### Technical Problem

In PTL 1, a method for using a different injector among the plural injectors according to a load that is required for the fuel cell system is disclosed. However, provision of the plural injectors increases cost. In addition, since the injector is constructed of plural components, it is necessary to secure a specified space for mounting, which creates a problem of mountability.

The present invention has been made with a problem as described above as the background and therefore has a purpose of obtaining a hydrogen supply device capable of stably supplying hydrogen to a fuel cell according to an operating situation without requiring plural injectors.

### Solution to Problem

A hydrogen supply device according to the invention of the present application includes:
an injector that includes a solenoid valve and injects hydrogen from an injection hole when the solenoid valve is opened; and
an ejector that suctions hydrogen in anode off-gas of a fuel cell by a negative pressure generated by a flow of hydrogen injected from the injector and supplies, to the fuel cell, hydrogen injected from the injector and hydrogen in the anode off-gas, in which
the solenoid valve
includes: a valve seat section that includes the injection hole; and a valve body that is seated on the valve seat section when the solenoid valve is closed, and is configured that a cross-sectional area of a hydrogen flow path in the injection hole varies according to a stroke amount of the valve body.

### Advantageous Effects of Invention

The hydrogen supply device of the present invention can stably supply hydrogen to the fuel cell according to an operating situation without requiring plural injectors. Brief Description of Drawings

Fig. 1 is a configuration view of a fuel cell system that includes a hydrogen supply device according to the present invention.
Fig. 2 is a cross-sectional view schematically illustrating a configuration of the hydrogen supply device according to the present invention.
Fig. 3 is a cross-sectional view schematically illustrating a configuration of an injector according to a first embodiment of the present invention.
Fig. 4 is a cross-sectional view illustrating a state where a solenoid valve of the injector according to the first embodiment of the present invention is opened.
Fig. 5 is another cross-sectional view illustrating the state where the solenoid valve of the injector according to the first embodiment of the present invention is opened.
Fig. 6 illustrates an example of energization control for a solenoid section of the injector in the first embodiment of the present invention.
Fig. 7 illustrates another example of the energization control for the solenoid section of the injector in the first embodiment of the present invention.
Fig. 8 is a cross-sectional view illustrating a state where a solenoid valve of an injector according to a second embodiment of the present invention is opened.
Fig. 9 is another cross-sectional view illustrating the state where the solenoid valve of the injector according to the second embodiment of the present invention is opened.
Fig. 10 is yet another cross-sectional view illustrating the state where the solenoid valve of the injector according to the second embodiment of the present invention is opened.
Fig. 11 illustrates an example of energization control for a solenoid section of the injector in the second embodiment of the present invention.
Fig. 12 illustrates a modified embodiment of shapes of a small-diameter section of a valve body and a valve seat section in the injector according to the present invention.
Fig. 13 illustrates another modified embodiment of the shapes of the small-diameter section of the valve body and the valve seat section in the injector according to the present invention.

### Description of Embodiments

A description will hereinafter be made on embodiments of the present invention appropriately with reference to the drawings. Note that members, arrangement, and the like, which will be described below, do not limit the present invention and various modifications can be made thereto within the scope of the spirit of the present invention. In the drawings, components denoted by the same reference sign represent the same element, and a description thereon will appropriately be omitted. In addition, in each of the drawings, detailed portions will appropriately be simplified or will not be illustrated. Furthermore, an overlapping description will appropriately be simplified or will not be made.

### (First Embodiment)

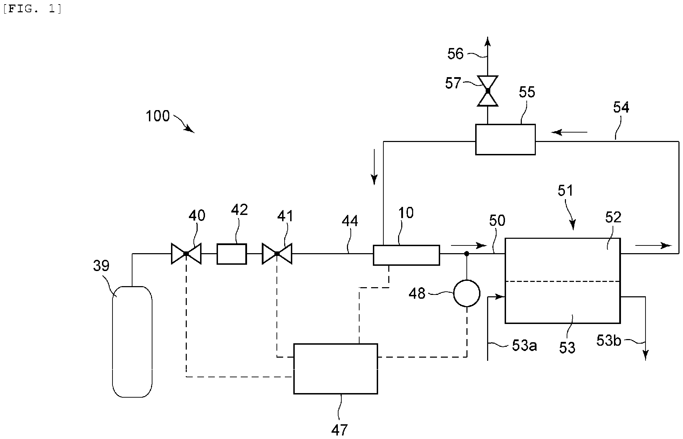

A description will be made on a first embodiment of the present invention. Fig. 1 is a configuration view of a fuel cell system 100 that includes a hydrogen supply device 10 according to the present invention. A description will be made on an overall configuration of the fuel cell system 100 with reference to Fig. 1. The fuel cell system 100 in this embodiment is mounted to a vehicle and generates electric power that is required by various devices such as a motor used for travel of the vehicle.

The fuel cell system 100 includes a hydrogen tank 39, a pressure regulator 42, the hydrogen supply device 10, a fuel cell 51, and a control unit 47. The fuel cell 51 includes an anode area 52 and a cathode area 53. The fuel cell system 100 further includes a circulation path 54 through which hydrogen contained in anode off-gas is recirculated to the hydrogen supply device 10, and the anode off-gas is gas that is discharged from the anode area 52.

The anode area 52 of the fuel cell 51 is supplied with hydrogen from the hydrogen supply device 10 through a connection pipe 50, and discharges the anode off-gas to the circulation path 54. Meanwhile, the cathode area 53 of the fuel cell 51 is supplied with air from an air supply path 53a and discharges cathode-off gas through a cathode-off gas discharge path 53b, and the cathode-off gas is gas that is discharged from the cathode area 53.

The circulation path 54 includes a gas-liquid separator 55. The gas-liquid separator 55 removes moisture in the anode off-gas and discharges the moisture into a discharge path 56. The discharge path 56 includes a discharge control valve 57 that is controlled by the control unit 47. Since the control unit 47 controls the discharge control valve 57, timing of discharging the moisture from the gas-liquid separator 55 and an amount of the moisture discharged therefrom are controlled.

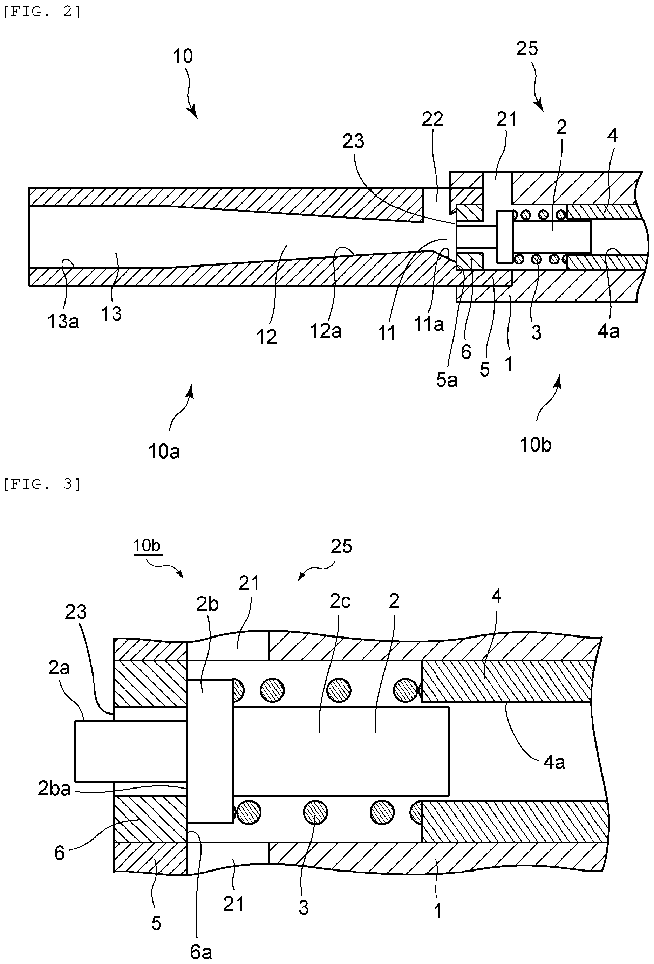

The hydrogen supply device 10 includes an ejector 10a and an injector 10b (see Fig. 2). The ejector 10a supplies hydrogen that is supplied from the hydrogen tank 39 via the injector 10b and hydrogen in the anode off-gas to the fuel cell 51 via the connection pipe 50. The connection pipe 50 includes a pressure sensor 48 that measures a pressure of hydrogen in the connection pipe 50. A measurement value by the pressure sensor 48 is sent to the control unit 47. The control unit 47 controls an amount of hydrogen to be supplied from the hydrogen supply device 10 to the fuel cell 51 on the basis of the measurement value by the pressure sensor 48, and thereby controls a pressure in the anode area 52.

A pressure of hydrogen in the hydrogen tank 39 is reduced via the pressure regulator 42 that is arranged to a supply pipe 44, and hydrogen is then supplied to the injector 10b of the hydrogen supply device 10. The pressure of hydrogen that has been supplied to the injector 10b is further reduced in the injector 10b, and hydrogen is then supplied to the fuel cell 51 through the ejector 10a. As the injector 10b, an electromagnetic proportional control valve in which a stroke amount of a valve member is variable according to a supplied current value and that can regulate an area of a hydrogen flow-through path can be used. The injector 10b is controlled by the control unit 47. The pressure regulator 42 is configured as a mechanical valve that is opened when the pressure of hydrogen supplied from the hydrogen tank 39 exceeds a set force that a valve member receives from a resilient body. As the pressure regulator 42, an electromagnetic proportional control valve in which a stroke amount of the valve member is variable according to the supplied current value and that can regulate the area of the hydrogen flow-through path can also be used. In this case, the pressure regulator 42 is controlled by the control unit 47.

Furthermore, a first shut-off valve 40 is arranged between the hydrogen tank 39 and the pressure regulator 42, and a second shut-off valve 41 is arranged between the pressure regulator 42 and the injector 10b. The first shut-off valve 40 can shut off a flow of hydrogen from the hydrogen tank 39 into the pressure regulator 42 when necessary. The second shut-off valve 41 can shut off the flow of hydrogen from the pressure regulator 42 into the injector 10b when necessary. The first shut-off valve 40 and the second shut-off valve 41 are controlled by the control unit 47.

Fig. 2 is a cross-sectional view schematically illustrating a configuration of the hydrogen supply device 10 according to the present invention. A description will hereinafter be made on the configuration of the hydrogen supply device 10 with reference to Fig. 2. The hydrogen supply device 10 includes the ejector 10a and the injector 10b. The hydrogen supply device 10 in this embodiment is configured that an injection hole 23 side of the injector 10b is connected to an end portion of the ejector 10a and that longitudinal axes of both of the ejector 10a and the injector 10b match. With this configuration, the injector 10b injects hydrogen supplied from the hydrogen tank 39 into the ejector 10a.

The ejector 10a has a hollow section that has a substantially cylindrical shape and has partially different inner diameters in a longitudinal direction. In an order from a side to which the injector 10b is connected, the hollow section includes an injector connection section 5, a negative pressure generation chamber 11, a diffuser section 12, and a hydrogen release section 13. The injector connection section 5 is fitted into a housing 1 of the injector 10b. In the fitted portion, the injector connection section 5 of the ejector 10a and the housing 1 of the injector 10b are fixed by an appropriate method such as press-fitting or welding. With this configuration, hydrogen that is injected from the injector 10b flows through the negative pressure generation chamber 11, the diffuser section 12, and the hydrogen release section 13 in this order. In other words, in the ejector 10a, the side formed with the injector connection section 5 is an upstream side, and a side formed with the hydrogen release section 13 is a downstream side.

The diffuser section 12 is formed to increase an inner diameter 12a toward the downstream side. The hydrogen release section 13 is formed to have a uniform inner diameter 13a in the longitudinal direction. In addition, a connection portion between the negative pressure generation chamber 11 and the diffuser section 12 and a connection portion between the diffuser section 12 and the hydrogen release section 13 are each formed without a step. Furthermore, a step 5a is formed in a connection portion between the negative pressure generation chamber 11 and the injector connection section 5 in order to accommodate a valve seat section 6 of the injector 10b, and the step 5a is a surface that is perpendicular to the longitudinal direction and faces an injector 10b side.

In a portion of the ejector 10a formed with the negative pressure generation chamber 11 therein, a circulating hydrogen suction port 22 is formed in a direction perpendicular to the longitudinal direction of the ejector 10a. The circulation path 54 is connected to the circulating hydrogen suction port 22. In the negative pressure generation chamber 11, a negative pressure is generated due to a flow velocity of hydrogen that is injected from the injector 10b. Due to this negative pressure, hydrogen in the anode off-gas in the circulation path 54 is suctioned from the circulating hydrogen suction port 22 and, together with hydrogen injected from the injector 10b, flows into the diffuser section 12 on the downstream side.

Fig. 3 is a cross-sectional view schematically illustrating a configuration of the injector 10b according to this embodiment. A detailed description will hereinafter be made on the injector 10b with reference to Fig. 3. The injector 10b is constructed of a solenoid valve 25, and injects hydrogen that is supplied from the hydrogen tank 39 via a hydrogen inflow port 21 into the ejector 10a from the injection hole 23. The solenoid valve 25 includes a solenoid section (not illustrated), the housing 1, a valve body 2, a spring 3, a guide member 4, and the valve seat section 6.

The housing 1 has a cylindrical shape and includes the valve body 2, the spring 3, the guide member 4, the valve seat section 6, and the unillustrated solenoid section therein.

The valve seat section 6 has a cylindrical shape, and a center axis of the cylindrical shape matches the longitudinal axis of the injector 10b. A hollow section of the valve seat section 6 serves as the injection hole 23 in this embodiment. In addition, of axial end surfaces of the valve seat section 6, the end surface that faces an ejector 10a side abuts the step 5a in the ejector 10a (see Fig. 2). Furthermore, of the axial end surfaces of the valve seat section 6, the end surface that faces an opposite side of the ejector 10a side abuts, as a valve seat side seat surface 6a, a valve body side seat surface 2ba of the valve body 2 when the injector 10b is closed. When the ejector 10a and the injector 10b are connected, the valve seat section 6 is fixed into the injector connection section 5 of the ejector 10a in advance by the appropriate method such as press-fitting or welding.

The valve body 2 is formed of plural columnar members with different outer diameters, and includes: a small-diameter section 2a; a large-diameter section 2b having the larger outer diameter than the small-diameter section 2a; and a guide section 2c having the outer diameter that is larger than the small-diameter section 2a and smaller than the large-diameter section 2b. Center axes of the small-diameter section 2a, the large-diameter section 2b, and the guide section 2c each match the longitudinal axis of the injector 10b. When seen from the large-diameter section 2b, the small-diameter section 2a is formed on the ejector 10a side. When the injector 10b is closed, or when a stroke amount of the valve body 2 is small, the small-diameter section 2a is located in the injection hole 23. When seen from the large-diameter section 2b, the guide section 2c is formed on an opposite side of the ejector 10a. In addition, when the injector 10b is closed, the valve body side seat surface 2ba, which is the perpendicular surface to the center axis and faces the ejector 10a side, in the large-diameter section 2b abuts the valve seat side seat surface 6a of the valve seat section 6. In this embodiment, the description has been made on the example in which the outer diameter of the guide section 2c is larger than that of the small-diameter section 2a and smaller than that of the large-diameter section 2b. However, the guide section 2c only needs to have the smaller outer diameter than the large-diameter section 2b, and thus may have the same outer diameter as the small-diameter section 2a or the smaller outer diameter than the small-diameter section 2a.

The spring 3 is a coil spring that is arranged between the guide member 4 and the large-diameter section 2b of the valve body 2, and presses the valve body 2 against the valve seat section 6 with a specified set force. In addition, the guide section 2c of the valve body 2 is located inside the spring 3 and guides the spring 3.

The guide member 4 has a cylindrical shape, and an outer diameter section thereof is fixed to the housing 1 by the appropriate method such as press-fitting or welding. In addition, an inner surface 4a of a hollow section of the guide member 4 guides the guide section 2c of the valve body 2.

The housing 1 includes the hydrogen inflow port 21, which is formed in the direction perpendicular to the longitudinal direction, near the large-diameter section 2b of the valve body 2. The number of the hydrogen inflow port 21 may be one or more, and is not limited. Hydrogen, the pressure of which is reduced to a specified pressure via the pressure regulator 42, is supplied to the hydrogen inflow port 21 from the high-pressure hydrogen tank 39.

When seen from the valve body 2, the solenoid valve 25 of the injector 10b includes the unillustrated solenoid section on the opposite side of the ejector 10a. When the solenoid valve 25 is closed, the valve body side seat surface 2ba formed on the valve body 2 is seated on the valve seat side seat surface 6a formed on the valve seat section 6 by a set force of the spring 3. When the solenoid valve 25 is opened, the control unit 47 applies the current to the solenoid section. As a result, the valve body 2 is attracted to a solenoid section side against the set force by the spring 3, and the valve body side seat surface 2ba formed on the valve body 2 separates from the valve seat side seat surface 6a formed on the valve seat section 6. When the solenoid valve 25 is opened, hydrogen, which has been supplied from the hydrogen tank 39 via the hydrogen inflow port 21, is injected into the ejector 10a from the injection hole 23.

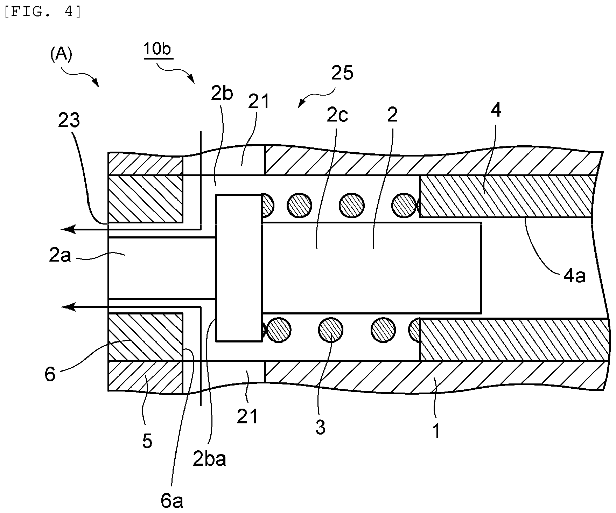

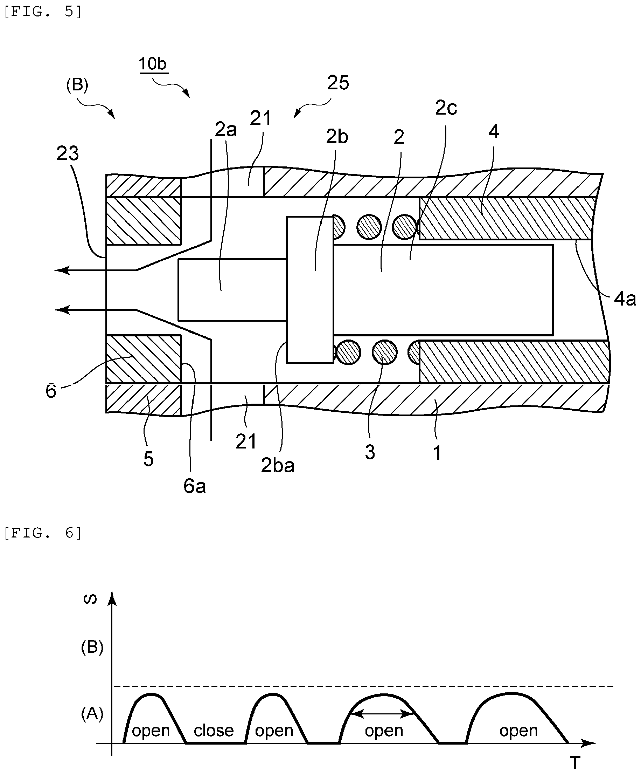

The injector 10b is configured as the electromagnetic proportional valve in which the stroke amount of the valve body 2 is variable according to the current value applied to the solenoid section and that can regulate a flow-through amount of hydrogen. Fig. 4 and Fig. 5 each illustrate a state where the solenoid valve 25 of the injector 10b is opened. In Fig. 4, although the solenoid valve 25 is opened, the stroke amount of the valve body 2 is small, and a part of the small-diameter section 2a of the valve body 2 remains in the injection hole 23. In this case, since a clearance between an inner diameter of the injection hole 23 and the outer diameter of the small-diameter section 2a of the valve body 2 serves as a hydrogen flow path in the injection hole 23, an injection amount of hydrogen is relatively small. Meanwhile, in Fig. 5, the stroke amount of the valve body 2 is larger than that in Fig. 4, and a position of an end portion on the ejector 10a side of the small-diameter section 2a in the valve body 2 substantially matches an end portion on a large-diameter section 2b side of the injection hole 23 when seen in an axial cross section. The amount of hydrogen that is injected in Fig. 5 is larger than that in a state illustrated Fig. 4.

Fig. 6 illustrates an example of energization control for the solenoid section of the injector 10b in the first embodiment of the present invention. In Fig. 6, a horizontal axis T represents time, and a vertical axis S represents the stroke amount of the valve body 2.

A region with the small stroke amount of the valve body 2, which is indicated by a symbol A on the vertical axis in Fig. 6, corresponds to the state in Fig. 4, that is, the state where the part of the small-diameter section 2a of the valve body 2 remains in the injection hole 23. Meanwhile, a region with the large stroke amount of the valve body 2, which is indicated by a symbol B on the vertical axis, corresponds to the stroke amount of the valve body 2 illustrated in Fig. 5 or a larger stroke amount than that (in other words, the state where the small-diameter section 2a of the valve body 2 has moved out of the injection hole 23) .

In the energization control illustrated in Fig. 6, the region with the small stroke amount of the valve body 2, which is indicated by the symbol A, is used. In the example illustrated in Fig. 6, a relatively-low pulsed current value is repeatedly applied to the solenoid section at specified intervals. At this time, the injector 10b is repeatedly closed and opened with the small stroke amount of the valve body 2 as illustrated in Fig. 4. This is an example of a case where a load required for the fuel cell 51 is relatively small.

A reason why the applied current is the pulsed current in this example is as follows. In the case where the load required for the fuel cell 51 is small, the required amount of hydrogen is also small. Accordingly, by performing intermittent operation with the small stroke amount, an amount of hydrogen gas that flows through per opening is increased, and a passage area at the time is limited, so as to increase a flow velocity of the hydrogen gas. In this way, it is possible to generate the negative pressure in the negative pressure generation chamber 11 and to secure a circulation amount of the anode off-gas. The control unit 47 controls the applied current at an appropriate interval, so as to be able to secure the required amount of the hydrogen gas at the low load by the intermittent operation. A mode of the injection illustrated in Fig. 6 corresponds to pulse injection.

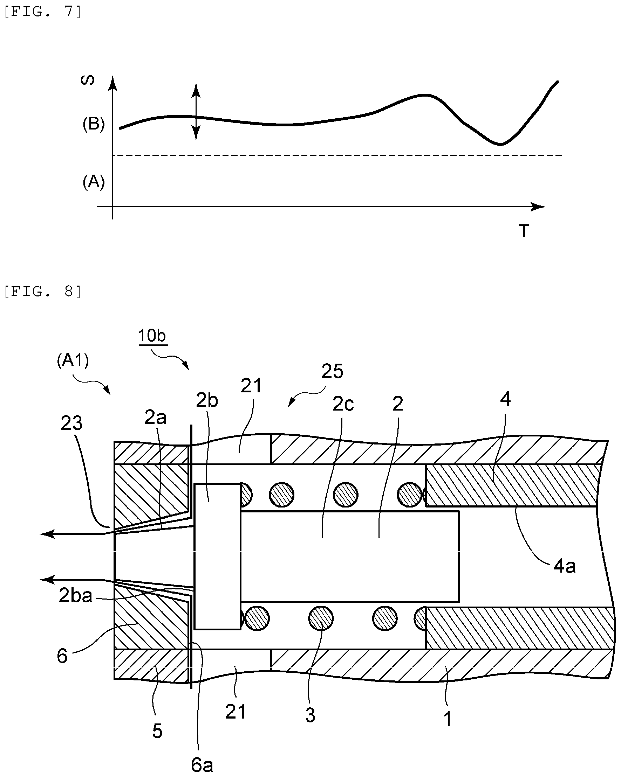

Fig. 7 illustrates an example of the energization control in the case where the load required for the fuel cell 51 is larger than that in the example illustrated in Fig. 6. Similar to Fig. 6, in Fig. 7, the horizontal axis T represents the time, and the vertical axis S represents the stroke amount of the valve body 2. In the example illustrated in Fig. 7, the region indicated by the symbol B is used, and is a region where the larger current value than that in the example illustrated in Fig. 6 is continuously applied to the solenoid section and the stroke amount of the valve body 2 is larger than that in Fig. 6.

However, depending on the required amount of hydrogen or the required flow velocity, the current may be pulsed even in the region indicated by the symbol B. Whether the applied current is set to be pulsed or continuous and what current value is set under what condition are set in advance by a test or a simulation, and such setting information is saved in a specified area of the control unit 47. The control unit 47 reads an appropriate energization mode from the saved setting information on the basis of a driving state of the vehicle to which the fuel cell 51 is mounted, the load required for the fuel cell 51, environment conditions such as an ambient temperature and an atmospheric pressure, the measurement value by the pressure sensor 48, and the like, and applies the specified current value to the solenoid section in the specified mode.

### (Second Embodiment)

Next, a description will be made on a hydrogen supply device 10 according to a second embodiment of the present invention. In the hydrogen supply device 10 according to the second embodiment, shapes of the valve seat section 6 and the small-diameter section 2a of the valve body 2 in the injector 10b differ from those in the hydrogen supply device 10 according to the first embodiment.

Fig. 8 is a cross-sectional view schematically illustrating the configuration of the injector 10b according to the second embodiment of the present invention. In Fig. 8, the small-diameter section 2a of the valve body 2 is formed to reduce the outer diameter toward the ejector 10a side. In addition, the injection hole 23 is formed to reduce the inner diameter toward the ejector 10a side. Furthermore, the clearance between the inner diameter of the injection hole 23 and the outer diameter of the small-diameter section 2a of the valve body 2 is formed to be reduced toward the ejector 10a side.

In the shapes illustrated in Fig. 8, any of various combinations of a change amount of the outer diameter of the small-diameter section 2a and a change amount of the inner diameter of the injection hole 23 in the longitudinal direction can be adopted. In order to make these change amounts appropriate for specifications of the vehicle, a characteristic required for the fuel cell 51, and the like, these change amounts are determined by a test or a simulation in consideration of a relationship between a flow rate and the flow velocity of hydrogen at the time when the injector 10b is opened.

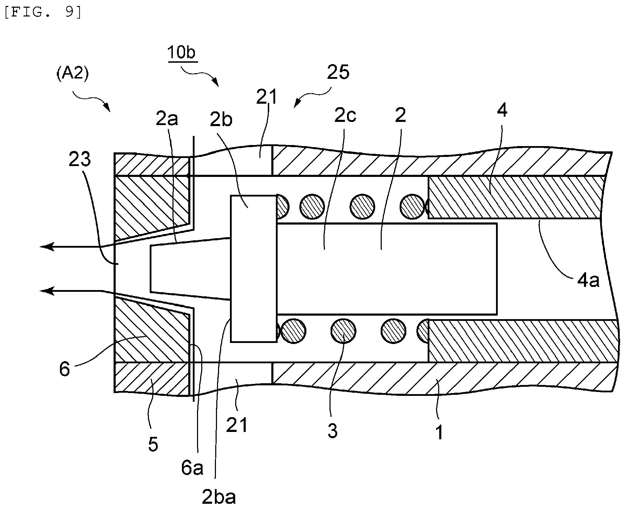

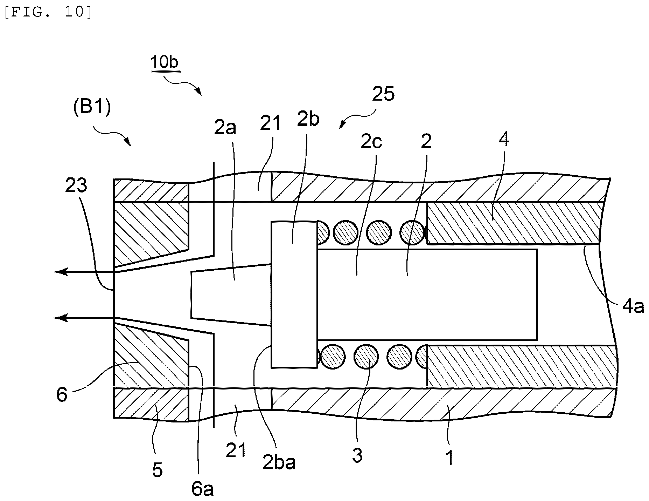

Fig. 8 illustrates a state where the stroke amount of the valve body 2 is slight and the small amount of hydrogen is injected from the injector 10b. Meanwhile, Fig. 9 illustrates a state where, although the stroke amount of the valve body 2 is larger than that in Fig. 8, the small-diameter section 2a of the valve body 2 partially remains in the injection hole 23. The amount of hydrogen that is injected in the state illustrated in Fig. 9 is larger than that in the state illustrated Fig. 8. In Fig. 10, the stroke amount of the valve body 2 is further larger than that in Fig. 9, and the position of the end portion on the ejector 10a side of the small-diameter section 2a in the valve body 2 substantially matches the end portion on the large-diameter section 2b of the injection hole 23 when seen in the cross section including the center axis. The amount of hydrogen that is injected in Fig. 10 is further larger than that in the state illustrated Fig. 9.

In this embodiment, as apparent from Fig. 8 to Fig. 10, as the stroke amount of the valve body 2 is increased, the clearance between the inner diameter of the injection hole 23 and the outer diameter of the small-diameter section 2a of the valve body 2 is increased. Thus, compared to the first embodiment, the injection amount of hydrogen is increased even when the stroke amount of the valve body 2 is the same. In addition, a change in the injection amount of hydrogen at the time when the small-diameter section 2a of the valve body 2 moves out of the injection hole 23 is smoother than that in the first embodiment.

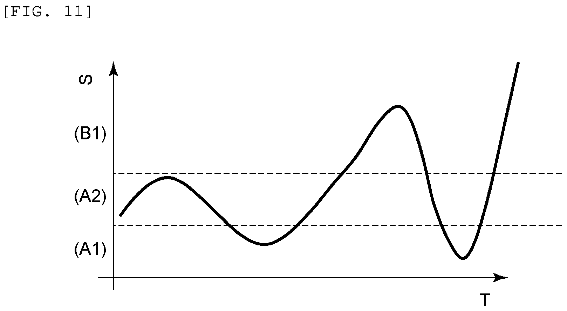

Fig. 11 illustrates an example of the energization control for the solenoid section of the injector 10b in the case where the states illustrated in Fig. 8 to Fig. 10 are used. In Fig. 11, the horizontal axis T represents the time, and the vertical axis S represents the stroke amount of the valve body 2.

A region indicated by a symbol A1 on the vertical axis in Fig. 11 corresponds to a state with the stroke amount of the valve body 2 from 0 to the state illustrated in Fig. 8, that is, a state where the stroke amount of the valve body 2 is zero or relatively small. In addition, a region indicated by a symbol A2 on the vertical axis in Fig. 11 has the larger stroke amount of the valve body 2 than the region indicated by the symbol A1. In other words, the stroke amount of the valve body 2 in the region A2 corresponds to the state illustrated in Fig. 9, in detail, a state with the stroke amount of the valve body 2 between the stroke amount of the valve body 2 illustrated in Fig. 8 and the stroke amount of the valve body 2 illustrated in Fig. 10. Furthermore, a region indicated by a symbol B1 on the vertical axis in Fig. 11 corresponds to the stroke amount of the valve body 2 illustrated in Fig. 10 or a larger stroke amount than that (in other words, the state where the small-diameter section 2a of the valve body 2 has moved out of the injection hole 23).

In the region A2 illustrated in Fig. 11, regardless of a fact that the part of the small-diameter section 2a of the valve body 2 is in the injection hole 23, opening and closing of the injector 10b are not repeated with a lapse of time like the region indicated by the symbol A in Fig. 6. A reason therefor is as follows. Fig. 6 corresponds to the case illustrated in Fig. 3 and Fig. 4 where the inner diameter of the injection hole 23 and the outer diameter of the small-diameter section 2a of the valve body 2 are in parallel valve shapes when seen in the cross section including the center axis. Meanwhile, in the valve shapes illustrated from Fig. 8 to Fig. 10, as the stroke amount of the valve body 2 is increased, the clearance between the inner diameter of the injection hole 23 and the outer diameter of the small-diameter section 2a of the valve body 2 is increased. Accordingly, in the region indicated by the symbol A2 in Fig. 11, regardless of the fact that the part of the small-diameter section 2a is in the injection hole 23, the injection amount of hydrogen is larger and the flow velocity thereof is higher than those in Fig. 6. Thus, the flow velocity of hydrogen does not have to be increased by the intermittent injection.

In addition, the region A1 illustrated in Fig. 11 represents a case where the stroke amount of the valve body 2 is temporarily reduced from that in the region A2, and a time for the stroke amount of the valve body 2 to enter the region A1 is short. Thus, an impact of the region A1 on the flow velocity of hydrogen is small, and the stroke amount of the valve body 2 is continuous. If the state where the stroke amount of the valve body 2 falls within the region A1 continues for a long time, the intermittent injection like that in Fig. 6 is possibly required.

### (Modified Embodiments)

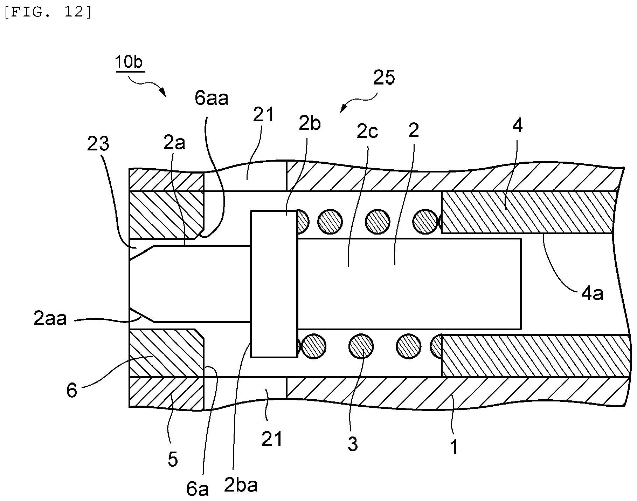

Fig. 12 illustrates a modified embodiment of shapes of the small-diameter section 2a of the valve body 2 and the valve seat section 6 in the injector 10b. In Fig. 12, in the injection hole 23, the end portion on the large-diameter section 2b side of the valve body 2 includes an enlarged diameter section 6aa that is formed to increase the inner diameter toward the large-diameter section 2b side when seen in the cross section including the center axis. In addition, in the small-diameter section 2a of the valve body 2, the end portion on the ejector 10a side includes a reduced diameter section 2aa that is formed to reduce the outer diameter toward the ejector 10a side when seen in the cross section including the center axis.

Fig. 12 illustrates an example in which angles of the enlarged diameter section 6aa and the reduced diameter section 2aa are 45 degrees with respect to the axial direction. However, such angles are not limited to 45 degrees and can be any of various angles. In addition, each of the enlarged diameter section 6aa and the reduced diameter section 2aa can be in any of various sizes. Furthermore, in the cross-sectional view in Fig. 12, in order to prevent formation of corners in the end portions of the enlarged diameter section 6aa and the reduced diameter section 2aa, only end portions thereof or the entire enlarged diameter section 6aa and the entire reduced diameter section 2aa may be formed to be curved. In other words, in the end portion on the large-diameter section 2b side of the injection hole 23, the enlarged diameter section 6aa only needs to be formed such that the inner diameter is increased toward the large-diameter section 2b side. In addition, in the end portion on the ejector 10a side of the small-diameter section 2a, the reduced diameter section 2aa only needs to be formed such that the outer diameter is reduced toward the ejector 10a side. Detailed shapes thereof are determined by a test or a simulation in consideration of a relationship among the stroke amount of the valve body 2, the flow rate of hydrogen, and the flow velocity of hydrogen at the time when the solenoid valve 25 is opened.

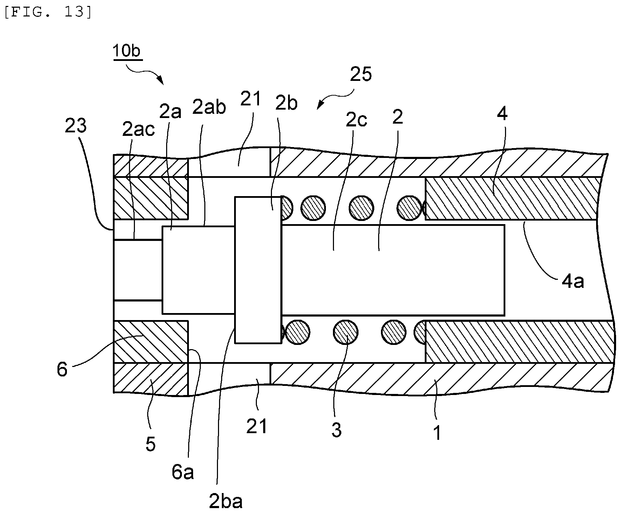

Fig. 13 illustrates another modified embodiment of the shapes of the small-diameter section 2a of the valve body 2 and the valve seat section 6 in the injector 10b. In Fig. 13, the small-diameter section 2a of the valve body 2 is formed of two cylindrical sections with different outer diameters. The small-diameter section 2a includes a first small-diameter section 2ab and a second small-diameter section 2ac from the large-diameter section 2b side, and the first small-diameter section 2ab is formed to have the larger outer diameter than the second small-diameter section 2ac.

Any of various combinations of the outer diameters of the first small-diameter section 2ab and the second small-diameter section 2ac and the axial length of each thereof can be adopted. The shapes of the first small-diameter section 2ab and the second small-diameter section 2ac are determined by a test or a simulation in consideration of a relationship among the stroke amount of the valve body 2, the flow rate of hydrogen, and the flow velocity of hydrogen at the time when the solenoid valve 25 is opened.

In addition, the combination of the shapes of the small-diameter section 2a of the valve body 2 and the valve seat section 6 is not limited to any of the combinations in the first embodiment, the second embodiment, Fig. 12, and Fig. 13. For example, any of various combinations, such as a combination of the small-diameter section 2a of the valve body 2 in the first embodiment and the valve seat section 6 in the second embodiment and a combination of the small-diameter section 2a of the valve body 2 illustrated in Fig. 13 and valve seat section 6 illustrated in Fig. 12 can be adopted.

Fig. 13 illustrates the example in which the small-diameter section 2a of the valve body 2 is formed with two steps of the small-diameter sections with the different outer diameters (the first small-diameter section 2ab and the second small-diameter section 2ac). However, the small-diameter section 2a may be formed with three or four small-diameter sections, and thus the number of steps in the embodiment are not limited to two.

As it has been described so far, according to the present invention, it is possible to stably supply hydrogen to the fuel cell 51 according to the operation state without providing the plural injectors.

In addition, according to the present invention, it is possible to select the combination of the shapes of the small-diameter section 2a of the valve body 2 and the valve seat section 6 according to the required hydrogen injection characteristic.

### Reference Signs List

- 2:: Valve body
- 2a:: Small-diameter section
- 2aa:: Reduced diameter section
- 2ab:: First small-diameter section
- 2ac:: Second small-diameter section
- 2b:: Large-diameter section
- 2c:: Guide section
- 3:: Spring
- 6:: Valve seat section
- 6aa:: Enlarged diameter section
- 10:: Hydrogen supply device
- 10a:: Ejector
- 10b:: Injector
- 23:: Injection hole
- 25:: Solenoid valve
- 51:: Fuel cell
- 100:: Fuel cell system

## Claims

1. A hydrogen supply device (10) comprising:
an injector (10b) that includes a solenoid valve (25) and injects hydrogen from an injection hole (23) when the solenoid valve (25) is opened; and
an ejector (10a) that suctions hydrogen in anode off-gas of a fuel cell (51) by a negative pressure generated by a flow of hydrogen injected from the injector (10b) and supplies, to the fuel cell (51), hydrogen injected from the injector (10b) and hydrogen in the anode off-gas, wherein
the solenoid valve (25) includes: a valve seat section (6) that includes the injection hole (23); and a valve body (2) that is seated on the valve seat section (6) when the solenoid valve (25) is closed, and is configured that a cross-sectional area of a hydrogen flow path in the injection hole (23) varies according to a stroke amount of the valve body (2).

2. The hydrogen supply device (10) according to claim 1, wherein
the valve body (2) includes: a large-diameter section (2b); and a small-diameter section (2a) that is formed on the ejector (10a) side of the large-diameter section (2b) and has a smaller diameter than the large-diameter section (2b), and
when the solenoid valve (25) is closed, an end surface on the ejector (10a) side of the large-diameter section (2b) is seated on the valve seat section (6), and the small-diameter section (2a) is located in the injection hole (23).

3. The hydrogen supply device (10) according to claim 2, wherein
the injection hole (23) is formed to have a uniform inner diameter in a cross section including a center axis.

4. The hydrogen supply device (10) according to claim 2, wherein
the small-diameter section (2a) is formed to have a uniform outer diameter in a cross section including a center axis.

5. The hydrogen supply device (10) according to claim 2, wherein
the injection hole (23) is formed to reduce an inner diameter thereof toward the ejector (10a) side in a cross section including a center axis.

6. The hydrogen supply device (10) according to claim 2, wherein
the small-diameter section (2a) is formed to reduce an outer diameter thereof toward the ejector (10a) side in a cross section including a center axis.

7. The hydrogen supply device (10) according to claim 2, wherein
a clearance between an inner diameter section of the injection hole (23) and an outer diameter section of the small-diameter section (2a) is formed to be reduced toward the ejector (10a) side in a cross section including a center axis.

8. The hydrogen supply device (10) according to claim 2, wherein
an end portion on the large-diameter section (2b) side of the injection hole (23) is formed with an enlarged diameter section (6aa), an inner diameter of which is increased toward the large-diameter section (2b) side.

9. The hydrogen supply device (10) according to claim 2, wherein
an end portion on the ejector (10a) side of the small-diameter section (2a) is formed with a reduced diameter section (2aa), an outer diameter of which is reduced toward the ejector (10a) side.

10. The hydrogen supply device (10) according to claim 2, wherein
the small-diameter section (2a) includes a first small-diameter section (2ab) and a second small-diameter section (2ac) having different outer diameters, and the first small-diameter section (2ab) has the larger outer diameter than the second small-diameter section (2ac) and is formed on the large-diameter section (2b) side.

11. The hydrogen supply device (10) according to any one of claims 2 to 10, wherein
the valve body (2) includes a guide section (2c) having a smaller diameter than the large-diameter section (2b) on an opposite side of the ejector (10a) when seen from the large-diameter section (2b), and the guide section (2c) is located on an inner side of a spring (3) that urges the valve body (2) to the valve seat section (6) side, and guides the spring (3).

12. The hydrogen supply device (10) according to any one of claims 2 to 11, wherein
the injector (10b) can perform pulse injection to repeatedly open/close the solenoid valve (25) by a pulsed current applied to the solenoid valve (25), and
when the pulse injection is performed, at least a part of the small-diameter section (2a) of the valve body (2) is located in the injection hole (23).
